# EUROPEAN PATENT APPLICATION

(11) **EP 1 014 717 A2**
(43) Date of publication of application: **28.06.2000**
(21) Application number: 99123839.5
(22) Date of filing: 01.12.1999
(51) Int. Cl.: H04N 5/913

(54) **A data recording apparatus, a data recording medium, a data reproducing apparatus, and a method of scrambling and de-scrambling data**

(30) Priority: 14.12.1998 JP 37505598; 10.03.1999 JP 6401799
(71) Applicant: Victor Company of Japan, Ltd., Yokohama 221-0022 (JP)
(72) Inventor: Yokouchi, Kentaro, Yokohama-shi, Kanagawa-ken (JP)
(74) Representative: Manitz, Finsterwald & Partner

(57) **Abstract**

Content data (AV data) is scrambled according to scrambling algorithm. The scrambled content data, de-scrambling algorithm, and flag data indicative of de-scrambling algorithm data is recorded or transmitted. The transmitted (recorded) data is received (read). If the data includes the flag data, the scrambled data is de-scrambled with the de-scrambling algorithm indicated by the flag data. If no flag data and there is de-scrambling algorithm, the de-scrambling algorithm is stored and used for de-scrambling the content data. If the flag data disagrees with the flag data on the de-scrambling side, the received de-scrambling algorithm is used for de-scrambling the content data. Moreover, the content data is scrambled with first scrambling algorithm data. De-scrambling algorithm for de-scrambling the content data scrambled with the first scrambling algorithm is scrambled with second scrambling algorithm. The scrambled content data, the scrambled de-scrambling algorithm, and flag data indicating the second scrambling algorithm data is recorded (transmitted). The scrambled de-scrambling algorithm is decoded according to the flag data indicating the second scrambling algorithm. The content data is de-scrambled with the de-scrambling algorithm de-scrambled according to the flag data.

## Description

### BACKGROUND OF THE INVENTION

### 1. Field of the Invention

This invention relates to a data recording apparatus, a data recording medium, a data reproducing apparatus, and a method of scrambling and de-scrambling data.

### 2. Description of the Prior Art

A recording apparatus for scrambling video data and audio data and recording the scrambled video and audio data is known.

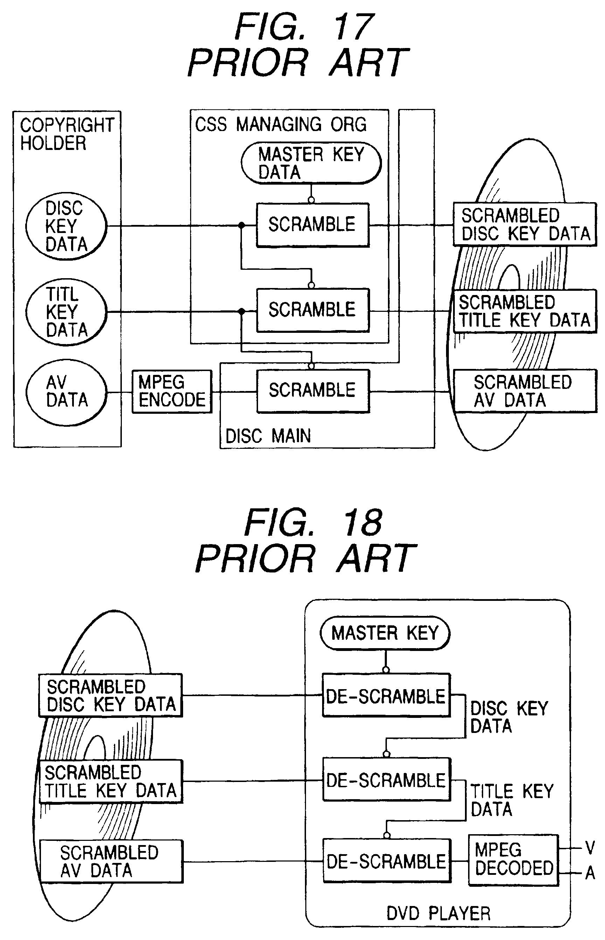

A DVD content scramble system (CSS) is disclosed in National Technical Report Vol. 43, p118-122, Jun. 1997. Figs. 17 and 18 are block diagrams of this prior art scramble system. In Fig. 17, disc key data is supplied from a copyright holder to a CSS managing organization which scrambles the disc key with master key data. Title key data is supplied from the copyright holder to a CSS managing organization which scrambles the title key data with disc key data. Audio and visual data is encoded with MPEG encoder. The scrambled disc key data, the scrambled title key data, and the MPEG-encoded audio and visual data are supplied to a disc manufacture which records the scrambled disc key data, the scrambled title key data, and the scrambled audio and visual data on a DVD disc.

In Fig. 18, a DVD player de-scrambles the scrambled disc key data from the DVD disc with master key data which is determined every manufacture. The de-scrambled disc key data is used for de-scrambling the scrambled title key data from the DVD disc. The de-scrambled title key data is used for de-scrambling the audio and visual data. The de-scrambled audio and visual data is decoded with an MPEG decoder to output audio data and video data.

In this prior art scrambling and de-scrambling operations, the master key data, the disc key data, and the title key data can be changed. However, the scrambling algorithm is fixed, so that it is difficult to change the scrambling algorithm.

### SUMMARY OF THE INVENTION

The aim of the present invention is to provide a superior data recording apparatus, a superior data recording medium, a superior data reproducing apparatus, a superior method of scrambling and de-scrambling data.

According to the present invention there is provided a first data recording apparatus including: a scrambling circuit for scrambling content data in accordance with scrambling algorithm data; and a recording circuit for recording the content data from the scrambling circuit, de-scrambling algorithm data for de-scrambling the content data scrambled by the scrambling algorithm data, and flag data indicative of the de-scrambling algorithm data on a recording medium.

According to the present invention there is provided a first data recording medium including: a first region for storing content data scrambled in accordance with scrambling algorithm data; a second region for storing de-scrambling algorithm data for de-scrambling the content data scrambled by the scrambling algorithm data; and a third region for storing flag data indicative of the de-scrambling algorithm data.

According to the present invention there is provided a first data reproducing apparatus for reproducing data including content data scrambled in accordance with scrambling algorithm data, first de-scrambling algorithm data for de-scrambling the content data scrambled in accordance with the scrambling algorithm data, and first flag data indicative of the de-scrambling algorithm data, including: a receiving circuit for receiving the data; a storing circuit for storing second de-scrambling algorithm data and second flag data indicative of the second de-scrambling algorithm data, and storing the first de-scrambling algorithm data from the receiving circuit in response to the receiving circuit; a comparing circuit for comparing the first flag data with the second flag data; a selecting circuit for selecting the second de-scrambling algorithm data when the first flag data agrees with the second flag data and selecting the first de-scrambling algorithm data in the storing circuit when the first flag data disagrees with the second flag data; and a de-scrambling circuit for de-scrambling the content data from the receiving circuit in accordance with an output of the selecting circuit to output de-scrambled content data.

According to the present invention there is provided a first method of scrambling and de-scrambling data including the steps of: scrambling content data in accordance with a scrambling algorithm; transmitting the content data from the scrambling circuit, de-scrambling algorithm data for de-scrambling the content data scrambled in accordance with the scrambling algorithm, and flag data indicative of the de-scrambling algorithm data; receiving the transmitted data; storing second de-scrambling algorithm data and second flag data indicative of the second de-scrambling algorithm data in advance, and storing the first de-scrambling algorithm data; comparing the first flag data with the second flag data; selecting the second de-scrambling algorithm data when the first flag data agrees with the second flag data and selecting the first de-scrambling algorithm data when the first flag data disagrees with the second flag data; and de-scrambling the content data in accordance with the selected de-scrambling algorithm data to output de-scrambled content data.

According to the present invention there is provided a second data recording apparatus including: a first scrambling circuit for scrambling content data in accordance with first scrambling algorithm data; a second scrambling circuit for scrambling de-scrambling algorithm data in accordance with second scrambling algorithm data, the de-scrambling algorithm data being provided for de-scrambling the content data scrambled in accordance with the first scrambling algorithm data; and a recording circuit for recording the content data from the first scrambling circuit, the de-scrambling algorithm data from the second scrambling circuit, and flag data indicative of the second scrambling algorithm data on a recording medium.

According to the present invention there is provided a second recording medium including: a first region for storing content data scrambled in accordance with first scrambling algorithm data; a second region for storing de-scrambling algorithm data for de-scrambling the first scrambling algorithm data scrambled with second scrambling algorithm data; and a third region for storing flag data indicative of the second de-scrambling algorithm data.

According to the present invention there is provided a second data reproducing apparatus for reproducing data including content data scrambled in accordance with first scrambling algorithm data, first de-scrambling algorithm data scrambled with second scrambling algorithm data for de-scrambling the content data, and flag data indicative of the second scrambling algorithm data, including: a receiving circuit for receiving the data; a selecting circuit for selecting one of a plurality of sets of second de-scrambling algorithm data which corresponds to the second scrambling algorithm data in accordance with the flag data; a first de-scrambling circuit for de-scrambling the first de-scrambling algorithm data in accordance with the selected one set of the second de-scrambling algorithm data; and a second de-scrambling circuit for de-scrambling the content data from the receiving circuit in accordance with the first de-scrambling algorithm data from the first de-scrambling circuit.

According to the present invention there is provided a second method of scrambling and de-scrambling data comprising the steps of: (a) scrambling content data in accordance with first scrambling algorithm data; (b) scrambling first de-scrambling algorithm data in accordance with second scrambling algorithm data, the first de-scrambling algorithm data being provided for de-scrambling the content data scrambled in step (a); (c) transmitting data including the content data scrambled in step (a), the first de-scrambling algorithm data scrambled in step (b), and flag data indicative of the second scrambling algorithm data; (d) receiving the data; (e) selecting one of a plurality of sets of second de-scrambling algorithm data which corresponds to the second scrambling algorithm data in accordance with the flag data in the received data; (f) de-scrambling the first de-scrambling algorithm data in the received data in accordance with the selected one set of second de-scrambling algorithm data; and (g) de-scrambling the content data in the received data in accordance with the first de-scrambling algorithm data de-scrambled in step (f).

According to the present invention there is provided a third data recording apparatus including: a scrambling circuit for scrambling content data in accordance with scrambling algorithm data; and a recording circuit for recording the content data from the scrambling circuit and flag data indicative of the de-scrambling algorithm data on a recording medium.

According to the present invention there is provided a third data recording medium including: a first region for storing content data scrambled in accordance with scrambling algorithm data; and a second region for storing flag data indicative of the scrambling algorithm data.

According to the present invention there is provided a third data reproducing apparatus for reproducing data including content data scrambled in accordance with scrambling algorithm data and flag data indicative of de-scrambling algorithm data for de-scrambling the content data scrambled with the scrambling algorithm data, including: a receiving circuit for receiving the data; a storing circuit for storing a plurality of sets of second de-scrambling algorithm data; a selecting circuit for selecting one set of the second de-scrambling algorithm data corresponding to the flag data; and a de-scrambling circuit for de-scrambling the content data from the receiving circuit in accordance with the one set of the second de-scrambling algorithm data.

According to the present invention there is provided a third method of scrambling and de-scrambling data including the steps of: scrambling content data in accordance with scrambling algorithm data; transmitting the content data scrambled in accordance with the scrambling algorithm data and flag data indicative of de-scrambling algorithm data for de-scrambling the content data scrambled with the scrambling algorithm data; receiving the transmitted content data and flag data; storing a plurality of sets of second de-scrambling algorithm data; selecting one set of the second de-scrambling algorithm data corresponding to the received flag data; and de-scrambling the content data from the receiving circuit in accordance with the one set of the second de-scrambling algorithm data.

According to the present invention there is provided a fourth data recording apparatus including: a scrambling circuit for scrambling content data in accordance with scrambling algorithm data; and a recording circuit for recording the content data from the scrambling circuit and de-scrambling algorithm data for de-scrambling the content data scrambled by the scrambling algorithm data on a recording medium.

According to the present invention there is provided a fourth data recording medium including: a first region for storing content data scrambled in accordance with scrambling algorithm data; and a second region for storing de-scrambling algorithm data for de-scrambling the content data scrambled by the scrambling algorithm data.

According to the present invention there is provided a fourth data reproducing apparatus for reproducing data including content data scrambled in accordance with scrambling algorithm data and de-scrambling algorithm data for de-scrambling the content data scrambled in accordance with the scrambling algorithm data, including: a receiving circuit for receiving the data; a storing circuit for storing the de-scrambling algorithm data from the receiving circuit; a de-scrambling circuit for de-scrambling the content data from the receiving circuit in accordance with the de-scrambling algorithm data from the storing circuit to output de-scrambled content data.

According to the present invention there is provided a fourth method of scrambling and de-scrambling data including the steps of: scrambling content data in accordance with scrambling algorithm data; transmitting the content data from the scrambling circuit and de-scrambling algorithm data for de-scrambling the content data scrambled in accordance with the scrambling algorithm data; receiving the transmitted content data and the transmitted de-scrambling algorithm data; storing second de-scrambling algorithm data; and de-scrambling the content data from the receiving circuit in accordance with the de-scrambling algorithm data in the storing circuit to output the de-scrambled content data.

### BRIEF DESCRIPTION OF THE DRAWINGS

The object and features of the present invention will become more readily apparent from the following detailed description taken in connection with the accompanying drawings in which:
Fig. 1 is a plan view of a recording medium according to a first embodiment, which plan view is also referred in the second embodiment;
Figs. 2A to 2D are illustrations of a data format according to the first embodiment, which illustrations are also referred in a third embodiment;
Fig. 3 is a block diagram of a recording apparatus according to the first embodiment;
Fig. 4 is a block diagram of a reproducing apparatus according to the first embodiment;
Fig. 5 is a block diagram of a DVD player as the reproducing apparatus according to the first embodiment which block diagram are also referred in the second embodiment;
Fig. 6 is a block diagram of a data storing circuit shown in Fig. 5;
Fig. 7 is a block diagram of a de-scrambling circuit shown in Fig. 5;
Fig. 8 depicts a flow chart of de-scrambling operation according to the first embodiment;
Figs. 9A to 9E are illustrations of a second embodiment showing a data format for recording AV data, which illustrations are also referred in a fourth embodiment;
Fig. 10 is a block diagram of a recording apparatus according to the second embodiment;
Fig. 11 is a block diagram of a reproducing apparatus according to the second embodiment;
Fig. 12 is block diagram of a de-scrambling circuit shown in Fig. 11;
Fig. 13 is a transmitting apparatus according to a third embodiment;
Fig. 14 is a receiving apparatus according to the third embodiment;
Fig. 15 is a transmitting apparatus according to a fourth embodiment;
Fig. 16 is a receiving apparatus according to the fourth embodiment; and
Figs. 17 and 18 are block diagrams of a prior art scramble system.

The same or corresponding elements or parts are designated with like references throughout the drawings.

### DETAILED DESCRIPTION OF THE INVENTION

### <FIRST EMBODIMENT>

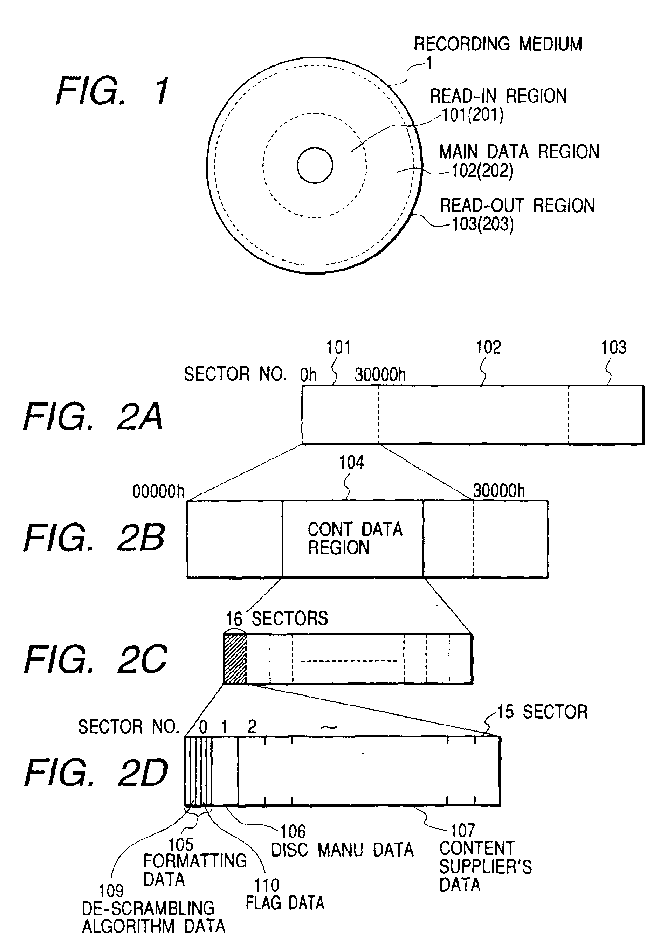

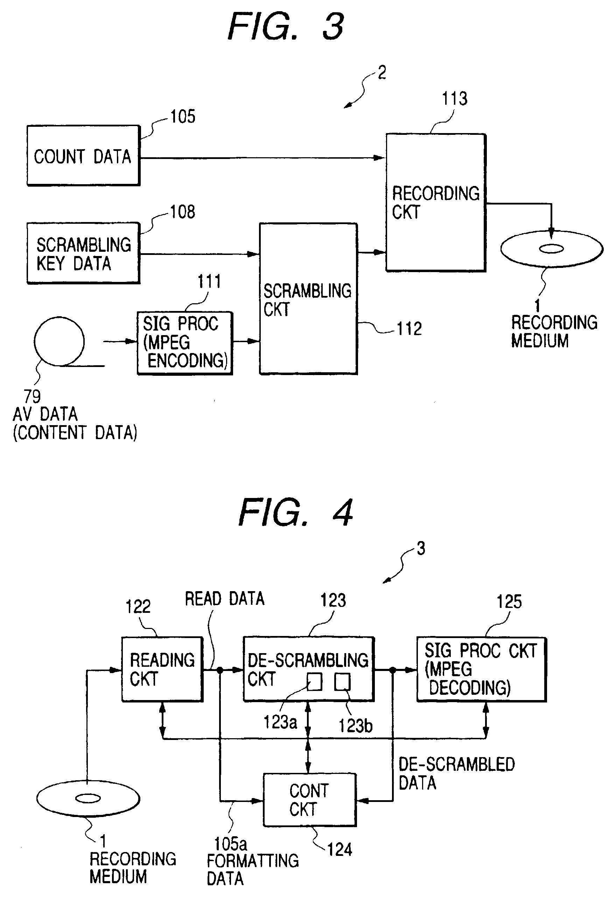

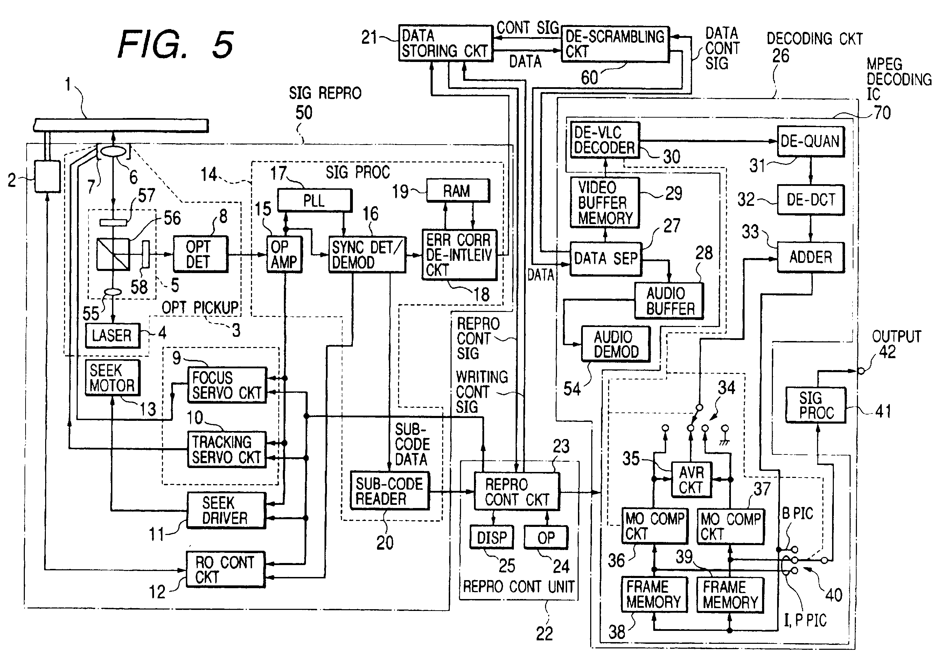

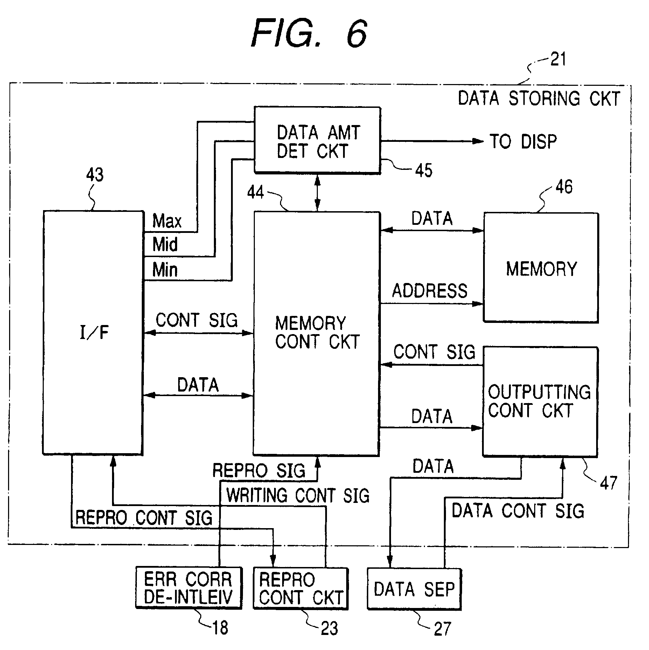

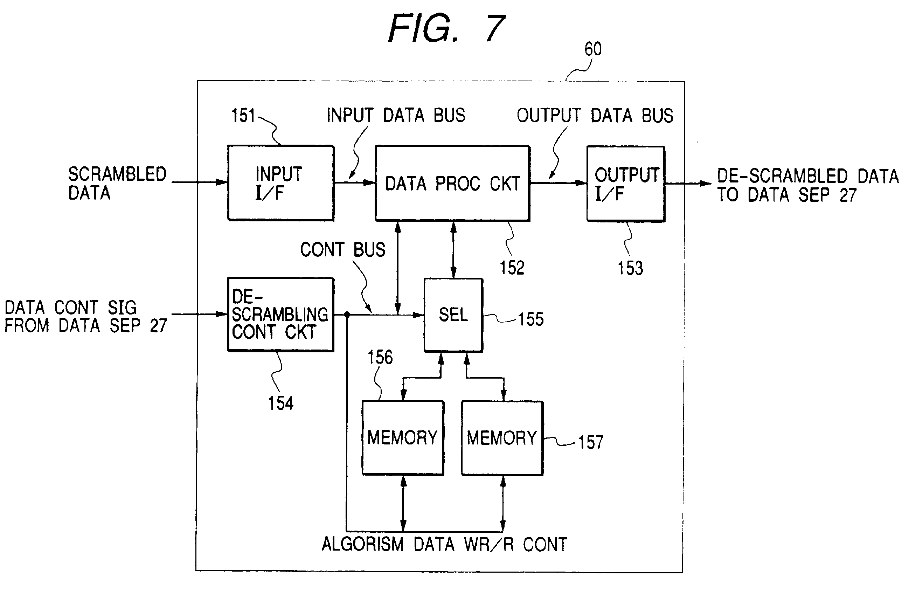

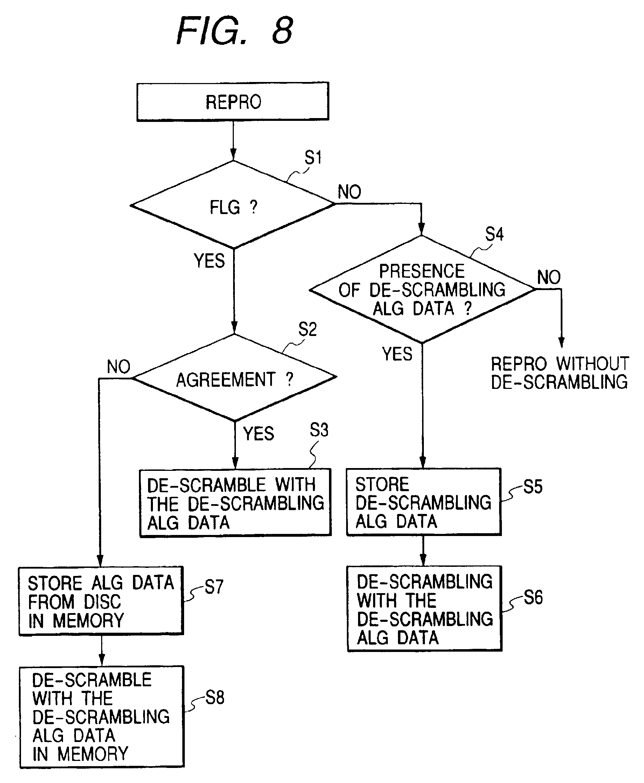

Fig. 1 is a plan view of a recording medium according to a first embodiment, which plan view will be also referred in the second embodiment. Figs. 2A to 2D are illustrations of data format according to the first embodiment. Fig. 3 is a block diagram of a recording apparatus according to the first embodiment. Fig. 4 is a block diagram of a reproducing apparatus according to the first embodiment. Fig. 5 is a block diagram of a DVD player as the reproducing apparatus according to the first embodiment which block diagram will be referred in the second embodiment. Fig. 6 is a block diagram of a data storing circuit shown in Fig. 5. Fig. 7 is a block diagram of a de-scrambling circuit shown in Fig. 5. Fig. 8 depicts a flow chart of de-scrambling operation according to the first embodiment.

In Fig. 1, data is recorded to have a spiral track or tracks on the recording medium (disc) 1 at a unit of sector to be reproduced from the inside track of the recording medium 1 for a DVD (digital versatile disc). Moreover, data is recorded on the recording medium 1 to provide a read-in region 101, a main data region 102, and a read-out region 103 from inside toward outside of the plane of the recording medium 1. The read-in region 101 stores the position data for reproducing and other data for reading the main data stored in the main data region 102. The main data region 102 stores scrambled content data (main data), for example, audio data and video data (hereinafter, referred to as AV data). The read-out region 103 stores other data. The read-in region 101 includes a control data region 104 as shown in Figs. 2A and 2B. Sixteen sectors at beginning of the control data region 104 store formatting data 105 at No. 0 sector, a disc manufacturer data 106 at No. 1 sector thereof, and content supplier data 107 at No. 2 to No. 15 sectors as shown in Fig. 2D. The formatting data 105 includes de-scrambling algorithm data 109 for de-scrambling the scrambled data at the main data region 102 and flag data 110 indicative of de-scrambling algorithm data for de-scrambling the scrambled content data.

As mentioned above, the recording medium 1 records content data scrambled in accordance with scrambling algorithm data at the main data region 102, de-scrambling algorithm data 109 for de-scrambling the content data scrambled by the scrambling algorithm data and flag data 110 indicative of the scrambling algorithm data at No. 1 sector at the control data region 104.

In Fig. 3, a recording apparatus including a signal processing circuit 111 for MPEG-encoding content data including AV data, a scrambling circuit 112 for scrambling the content data from the signal processing circuit 111 in accordance with a predetermined scrambling algorithm data with scrambling key data 108, and a recording circuit for recording the content data from the scrambling circuit 112 with control data 105 on a recording medium 1.

At first, a content data supplier for the AV data prepares the AV data 79 as the content data, the scrambling key data 108 used for scrambling with a predetermined scrambling algorithm, and the control data 105. The control data, as shown in Figs. 2B to 2D, includes type data or data structure data of the recording medium 1, flag data 110 indicating de-scrambling algorithm data, the de-scrambling algorithm data 109, disc manufacture data, and contents supplier data, wherein either of the flag data 110 or the de-scrambling algorithm data may be omitted.

The content data (AV data) 79 is supplied to the signal processing circuit 111 which compresses the content data with the MPEG method for example. The compressed data from the signal processing circuit 111 is supplied to the scrambling circuit 112 which scrambles the content data from the signal processing circuit 111 in accordance with a predetermined scrambling algorithm (data) with the scrambling key data 108 to improve the secretiveness. The scrambled content data is supplied to the recording circuit 113. The recording circuit 113 records the compressed and scrambled content data with control data including formatting data, the flag data 110, and de-scrambling algorithm data 109 with the format shown in Figs. 2A to 2D. Moreover, an error correction operation and the EFM modulation are performed before recording. As a result, a master disc is provided and a large number of DVD discs are manufactured from the master disc with the well-known disc stamper. If the disc is of DVD RAM, the disc is directly read.

In the above-mentioned description, either of recording the flag data 110 or recording the de-scrambling algorithm data 109 may be omitted. That is, the recording circuit may record the flag data 110 without de-scrambling algorithm data 109, de-scrambling algorithm data 109 without the flag data 110, or both the de-scrambling algorithm data 109 and the flag data 110 on the recording medium 1.

The reproducing apparatus, as shown in Fig. 4, includes a reading circuit 122 for reading data on the recording medium 1, a de-scrambling circuit 123 for de-scrambling the content data in the read data, a signal processing circuit 125 for processing the de-scrambled content data to output reproduced AV data, and a control circuit 124 for controlling the reading circuit 122, the de-scrambling circuit 123, the signal processing circuit 125 in accordance with the control data from the reading circuit 122 and the de-scrambled data from the de-scrambling circuit 123.

The data on the recording medium is read by the reading circuit 122 which supplies the read data to de-scrambling circuit 123 and to the control circuit 124. The de-scrambling circuit 123 includes a first memory 123a for previously storing at least one set of de-scrambling algorithm data with second flag data indicative of at least one set of the de-scrambling algorithm data and a second memory 123b for storing de-scrambling algorithm data from the read data.

The control circuit 124 receives the formatting data 105 which may include the de-scrambling algorithm data 109 and a flag data 110 from the reading circuit 122 and determines one set of de-scrambling algorithm data in accordance with the de-scrambling algorithm data 109 and the flag data 110 in the formatting data 105.

The control circuit 124 determines one set of de-scrambling algorithm data in accordance with the flow chart shown in Fig. 8.

In step s1, the control circuit 124 checks whether the flag data 110 is included. If the flag data 110 is included, the control circuit 124 checks whether the flag data 110 from the recording medium 1 agrees with the second flag data from the first memory 123a in step s2. If there is agreement, the control circuit 124 determines one set of the de-scrambling algorithm data of which second flag data agrees with the flag data 110 from the recording medium 1 and commands the de-scrambling circuit 123 to use the determined de-scrambling algorithm data for de-scrambling in step s3.

In step s1, if the flag data 110 is not included, the control circuit 124 checks whether the de-scrambling algorithm data 109 is included in the formatting data 105 in step s4. If the de-scrambling algorithm data 109 is included in the formatting data 105, the control circuit 124 stores the de-scrambling algorithm data in the second memory 123b in step s5 and commands the de-scrambling circuit 123 to de-scramble the content data with the de-scrambling algorithm data in the second memory 123b in step s6.

In step s4, the de-scrambling algorithm data 109 is not included in the formatting data 105, the control circuit 124 commands the de-scrambling circuit 123 to reproduce without de-scrambling.

In step s2, if there is no agreement, the control circuit 124 stores the de-scrambling algorithm data 109 from the disc in the second memory 123b in step s7 and commands the de-scrambling circuit 123 to de-scramble the content data with the de-scrambling algorithm data in the second memory 123b in step s8.

As mentioned above, if the flag data 110 is included in the read formatting data 105 and if there is second flag data agreeing with the flag data 110 included in the formatting data 105, one set of the algorithm data in the first memory 123a is used for de-scrambling. If the flag data 110 is not included in the formatting data 105 or if the flag data 110 disagrees with any second flag data stored in the first memory 123a indicative of the de-scrambling data stored in the first memory 123a, the de-scrambling algorithm data is read and stored in the second memory 123b to use it for de-scrambling the read content data. If there is no flag data 110 and no de-scrambling algorithm data in the formatting data 105, the read content data is reproduced without de-scrambling.

The reproducing apparatus will be described more specifically with reference to Figs. 5 and 6.

The disc (recording medium) 1 is rotated by a drive motor 2 at a predetermined rotating speed. The drive motor 2 is controlled by a rotation control circuit 12. An optical pickup 3 includes a laser light source (semiconductor laser) 4, a collimattor lens 55, a beam splitter 56, a quarter wave plate 57, a cylindrical lens 58, an object lens 6, an objective lens actuator 7, a photodetector 8, etc. for reading pit data recorded on the disc 1 by optical-to-electric conversion to supply the read data to the signal processing circuit 14. The optical pickup 3 moves in the radial direction of the recording medium 1 by a seek motor 13 and a seek driver 11. The actuator 7 drives the optical lens 6 in accordance with a focus error signal from a focus servo circuit 9 in the focusing direction and a tracking error signal from the tracking servo circuit 10 for tracking.

In the signal processing circuit 14, an operational amplifier 15 calculates a signal from the optical pickup 3 and generates a signal including the read data and the focus error signal and the tracking error signal supplied to a synchronizing detection/demodulation circuit 16, a PLL circuit 17, a focus server circuit 9, a tracking servo circuit 10, and the seek motor driver 11, respectively. The PLL circuit 17 extracts a clock signal from the signal from the operational amplifier 15 to supply the clock signal to the synchronizing detection/ demodulation circuit 16. The synchronizing detection/demodulation circuit 16 detects a synchronizing signal in accordance with the clock signal and demodulates sub-code data and main code data from the signal from the operational amplifier 15 in accordance with the synchronizing signal to output the sub-code data to a sub-code reader 20 and to an error correction de-interleaving circuit 18. The main code data supplied to the error correction de-interleaving circuit 18 is error-corrected using a RAM 19 and supplied to a memory control portion 44 in the data storing circuit 21 as shown in Fig. 6.

The sub-code data supplied to the sub-code reader 20 which processes the sub-code and the processed sub-code data is supplied to a reproducing control unit 22. The reproducing control circuit 23 in the reproducing control unit 22 generates control signals for the focus servo circuit 9, the tracking servo circuit 10, the seek motor driver 11, and the rotation control circuit 12. The reproducing control circuit 23 uses the sub-code data as position data of the optical pickup 3 for interrupting and restarting reproduction. Moreover, the reproducing control circuit 23 reads operation data from an operation unit 24 and displays address data on a display 25 in accordance with the sub-code data.

Moreover, as shown in Figs. 5 and 6, a writing control signal is supplied to an interface 43 in the data storing circuit 21 which supplies a reproducing control signal to a reproducing control circuit 23. Moreover, when the reproducing control circuit 23 supplies a decoding control signal to a decoding circuit 26, a data separating circuit 27 in the decoding circuit 26 supplies a data control signal to an output control circuit 47 (Fig. 6) in the data storing circuit 21. In response to the data control signal, the output control circuit 47 supplies a control signal to a memory control circuit 44 which supplies an address signal for reading reproduced data to be decoded in the decoding circuit 26 from the reproduced data stored in the memory 46. The data read from the memory 46 is supplied to a de-scrambling circuit 60 through the memory control circuit 44 and the output control circuit 47.

As shown in Fig. 7, the de-scrambling circuit 60 includes an input interface 151, a data processing circuit 152, an output interface 153, a control interface 154, an algorithm selecting circuit 155, and memories 156 and 157. The memory 156 stores a plurality of sets of de-scrambling algorithm data in advance and flag data corresponding to a plurality of the sets of de-scrambling algorithm data, respectively, and the memory 157 stores the read or received de-scrambling algorithm data under control by the de-scrambling control circuit 154. The de-scrambling control circuit 154 selects one of a plurality of the sets of de-scrambling algorithm data or uses the de-scrambling algorithm in accordance with the flow chart shown in Fig. 8.

In Fig. 5, the data separating circuit 27 judges whether the reproduced data from the de-scrambling circuit 60 is audio data (A Data) or video data (V data) in accordance with the data in the header, etc. and supplies the A data to an audio buffer 28 and the V data to a video buffer memory 29 in accordance with the judging result. The A data supplied to the audio buffer 28 is supplied to an audio demodulation circuit 54 from the audio buffer 28 at a constant transmission rate. The audio demodulation circuit 54 demodulates the A data and outputs a reproduced audio signal.

The V data supplied to the video buffer memory 29 is supplies to inverse-VLC decoder 30 of the MPEG decoding IC 70. The MPEG decoding IC 70 includes the de-VLC decoder 30, a reverse-quantizing circuit 31, a inverse-DCT circuit 32, an adder 33, switches 34 and 40, an averaging circuit 35, a motion compensation circuits 36 and 37, frame memories 38 and 39 to decode the V data from the video buffer memory 29 to supply B picture and I and P picture data to a signal processing circuit 41. The signal processing circuit 41 processes this signal to output a reproduced video signal through an output terminal 42.

In the video buffer memory 29, the reproduced data is supplied to the MPEG decoding IC such that the amount of the reproduced data corresponds to the amount of data necessary for MPEG decoding. Accordingly, it is necessary for suitably performing the MPEG decoding processing that a suitable amount of the reproduced data is stored in the buffer memory 29. Accordingly, when the amount of the video data stored in the video buffer memory 29 is less than a predetermined value, a data control signal is supplied to an output control circuit 47 in the data storing circuit 21 from the data separation circuit 27. In response to this, the outputting control circuit 47 supplies a control signal to the memory control circuit 44. In response to this, the memory control circuit supplies reading address data to the memory 46. The necessary amount of the video data is supplied from the memory 46 to the video buffer memory 29 through the de-scrambling circuit 60.

### <SECOND EMBODIMENT>

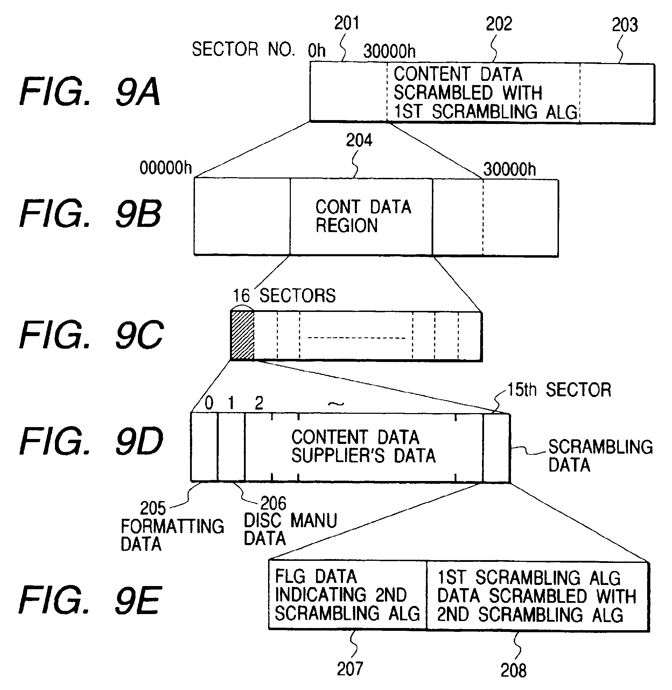

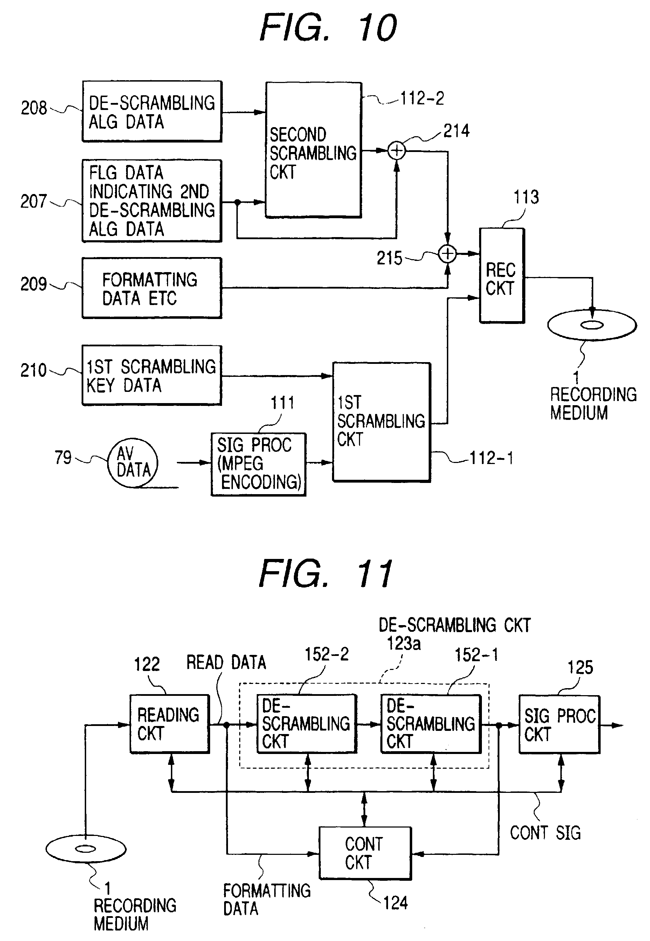

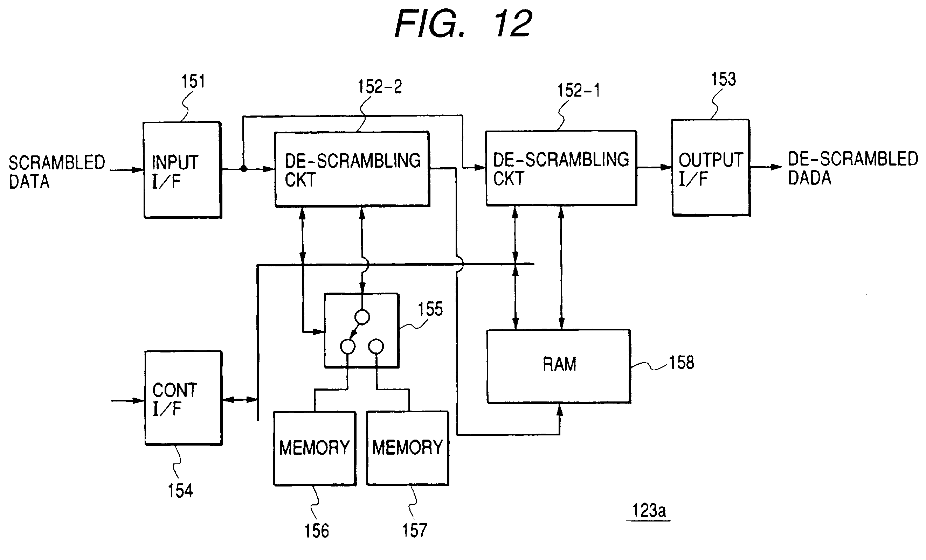

Figs. 9A to 9E are illustrations of a second embodiment showing data format of recording AV data. Fig. 10 is a block diagram of a recording apparatus according to the second embodiment. Fig. 11 is a block diagram of a reproducing apparatus according to the second embodiment. Fig. 12 is block diagram of a de-scrambling circuit shown in Fig. 11. In the second embodiment, Figs. 1 and 5 are also referred in the second embodiment.

In the second embodiment, on the scrambling side, the content data is scrambled in accordance with first scrambling algorithm data and the de-scrambling algorithm data for de-scrambling the scrambled content data is scrambled with a second scrambling algorithm data. Then, the scrambled content data, the de-scrambling algorithm data scrambled with the second scrambling algorithm data, and flag data indicative of the second scrambling algorithm data are transferred through a recording medium or a communication medium.

On the de-scrambling side, the de-scrambling algorithm data scrambled with the second scrambling algorithm data is de-scrambled with the de-scrambling algorithm data corresponding to the second scrambling algorithm data. With the de-scrambled de-scrambling algorithm data, the content data is de-scrambled.

In Fig. 1, data is recorded to have a spiral track or tracks on the recording medium 1 at a unit of sector to be reproduced from the inside track of the recording medium 1 for a DVD (digital versatile disc). Moreover, data is recorded on the recording medium 1 to provide a read-in region 201, a main data region 202, and a read-out region 203 from inside toward outside of the plane of the recording medium 1. The read-in region 201 stores the position data for reproducing and other data for reading the main data stored in the main data region 202. The main data regions 202 stores scrambled content data (main data), for example, audio data and video data (hereinafter, referred to as AV data). The read-out region 203 stores other data. The read-in region 201 includes a control data region 204 as shown in Fig. 9B. Sixteen sectors at the beginning of the control data region 204 stores formatting data 205 at No. 0 sector, a disc manufacturer data 206 at No. 1 sector, and content supplier data at No. 2 to No. 15 sectors as shown in Fig. 9D.

In Fig. 9E, No. 15 sector of the control data region 204 includes flag data 207 indicating the second scrambling algorithm data and the first scrambling algorithm data 208 scrambled with the second scrambling algorithm data.

In Fig. 10, the recording apparatus includes a signal processing circuit 111 for processing the AV data 79, a first scrambling circuit 112-1 for scrambling the AV data from the signal processing circuit 111, a second scrambling circuit 112-2 for scrambling the de-scrambling algorithm data, a data adder 214 for adding the flag data to the scrambled de-scrambling algorithm data, a data adder 215 for adding formatting data to output data from the data adder 214, and a recording circuit 113 for recording data from the data adder 215 and the first scrambling circuit 112-1 on the recording medium 1.

The AV data 79 as the content data is supplied to the signal processing circuit 111 which performs MPEG-encoding the AV data 79. The AV data from the signal processing circuit 111 is scrambled with the first scrambling key data 210 in accordance with a predetermined scrambling algorithm data by the first scrambling circuit 112-1. The scrambled AV data is supplied to the recording circuit 113.

The de-scrambling algorithm data 208 is scrambled with the second scrambling algorithm data by the second scrambling circuit 112-2 in accordance with the flag data 207 indicating the second de-scrambling algorithm data 208. The flag data 207 is added to the scrambled de-scrambled algorithm data. The output data of the data adder 214 is supplied to the data adder 215. The data adder 215 adds the formatting data, etc. to the output data of the data adder 214. Output data of the data adder 215 is supplied to the recording circuit 113. The recording circuit 113 records the output data of the data adder 215 and the scrambled AV data from the first scrambling circuit 112-1 on the recording medium (master disc) 1 in the format as shown in Figs. 9A to 9E.

In Fig. 11, the reproducing apparatus includes a reading circuit 122 for reading data from the recording medium 1, a de-scrambling circuit 123a for de-scrambling the AV data, a signal processing circuit 125 for processing the de-scrambled AV data, and a control circuit 124 for controlling the reading circuit, the de-scrambling circuit 123a, and the signal processing circuit 125.

In Fig. 12, the de-scrambling circuit 123a includes an input interface 151 for receiving the scrambled data, a de-scrambling circuit 152-1, a de-scrambling circuit 152-2, a data output interface 153, a control interface 154, an algorithm switch circuit 155, a memory 156 for storing the second de-scrambling algorithm data, a memory 157 for storing the first de-scrambling algorithm, and a RAM 158 for storing data.

The algorithm switch circuit 155 is switched in response to the flag data 207 indicative of the second de-scrambling algorithm data. The de-scrambling circuit 152-2 de-scrambles the first de-scrambling algorithm data scrambled with the second scrambling algorithm data with one of the second de-scrambling algorithm data corresponding to the flag data 207. The de-scrambled first de-scrambling algorithm data is supplied to the RAM 158.

Then, the de-scrambling circuit 152-1 de-scrambles the contents data (AV data) from the input interface 151 in accordance with the first de-scrambling algorithm data in the RAM 158. The de-scrambled content data is supplied to the data separation circuit 27 in the decoding circuit 26 shown in Fig. 5 through the output interface 153. The concrete reproducing apparatus is shown in Fig. 5, so that the detailed description is omitted.

In the above-mentioned embodiment, the data storing processing, the de-scrambling processing, the MPEG decoding are performed with hardware circuits. However, it is also possible to provide these processes with programs on a computer. The contents data, the de-scrambling algorithm data, the flag data, and other control data are recorded on the recording medium 1. However, this invention is also applicable to the system transmitting the de-scrambled content data through a transmission medium such as INTERNET.

Such embodiments will be described.

### <THIRD EMBODIMENT>

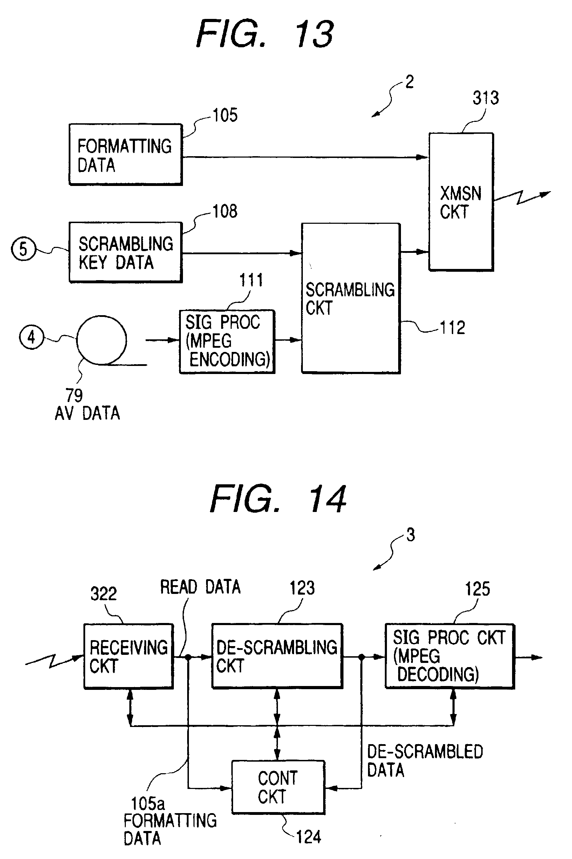

Fig. 13 is a scrambling apparatus with transmission according to a third embodiment. The scrambling apparatus of the third embodiment is substantially the same as the recording apparatus of the first embodiment shown in Fig. 3. The difference is that the transmission circuit 313 replaces the recording circuit 113. The transmission circuit 313 transmits the data including the formatting data including the de-scrambling algorithm data 109 and flag data 110 and the de-scrambled content data with the format shown in Figs. 2A to 2D.

Fig. 14 is a receiving apparatus according to the third embodiment. The de-scrambling apparatus with signal receiving of the third embodiment is substantially the same as the reproducing apparatus of the first embodiment shown in Fig. 4. The difference is that the receiving circuit 322 replaces the reading circuit 122. The receiving circuit 322 receives the data including the formatting data including the de-scrambling algorithm data 109 and flag data 110 and the de-scrambled content data with the format shown in Figs. 2A to 2D and de-scrambles the content data as similar as the first embodiment.

### <FOURTH EMBODIMENT>

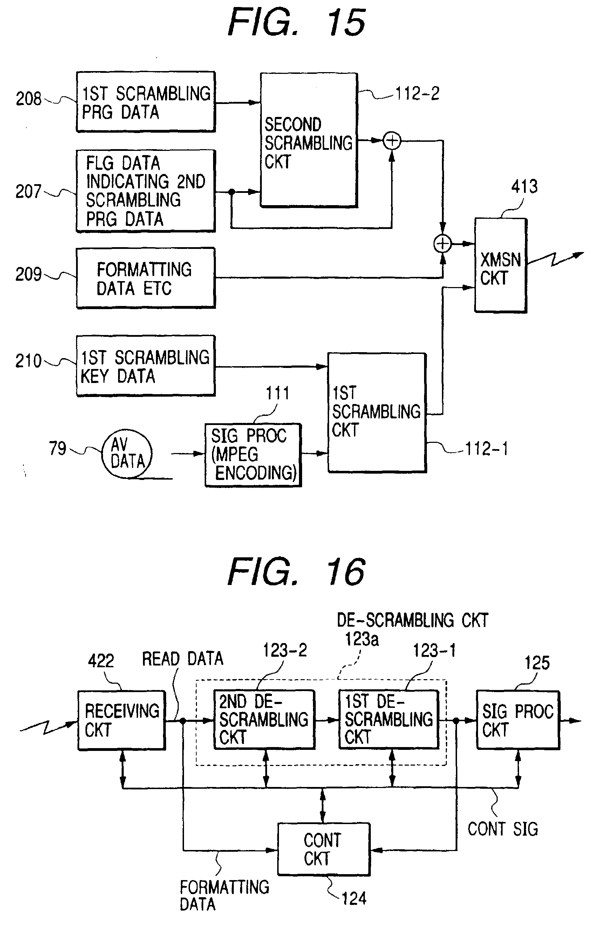

Fig. 15 is a scrambling apparatus with transmission according to a fourth embodiment. The scrambling apparatus of the fourth embodiment is substantially the same as the recording apparatus of the second embodiment shown in Fig. 10. The difference is that the transmission circuit 413 replaces the recording circuit 113 shown in Fig. 10. The transmission circuit 413 transmits the data including the formatting data including the scrambled de-scrambling algorithm data and the de-scrambled content data with the format shown in Figs. 9A to 9D.

Fig. 16 is a de-scrambling apparatus with signal receiving according to the fourth embodiment. The de-scrambling apparatus of the fourth embodiment is substantially the same as the reproducing apparatus of the second embodiment shown in Fig. 11. The difference is that the receiving circuit 422 replaces the reading circuit 122 shown in Fig. 11. The receiving circuit 422 receives the data including the formatting data including the scrambled de-scrambling algorithm data and the de-scrambled content data with the format shown in Figs. 9A to 9D and de-scrambles the content data as similar as the second embodiment.

## Claims

1. A data recording apparatus comprising:
scrambling means for scrambling content data in accordance with scrambling algorithm data; and
recording means for recording said content data from said scrambling means, de-scrambling algorithm data for de-scrambling said content data scrambled by said scrambling algorithm data, and flag data indicative of said de-scrambling algorithm data on a recording medium.

2. A data recording medium comprising:
a first region for storing content data scrambled in accordance with scrambling algorithm data;
a second region for storing de-scrambling algorithm data for de-scrambling said content data scrambled by said scrambling algorithm data; and
a third region for storing flag data indicative of said de-scrambling algorithm data.

3. A data reproducing apparatus for reproducing data including content data scrambled in accordance with scrambling algorithm data, first de-scrambling algorithm data for de-scrambling said content data scrambled in accordance with said scrambling algorithm data, and first flag data indicative of said de-scrambling algorithm data, comprising:
receiving means for receiving said data;
storing means for storing second de-scrambling algorithm data and second flag data indicative of said second de-scrambling algorithm data, and storing said first de-scrambling algorithm data from said receiving means in response to said receiving means;
comparing means for comparing said first flag data with said second flag data;
selecting means for selecting said second de-scrambling algorithm data when said first flag data agrees with said second flag data and selecting said first de-scrambling algorithm data in said storing means when said first flag data disagrees with said second flag data; and
de-scrambling means for de-scrambling said content data from said receiving means in accordance with an output of said selecting means to output de-scrambled content data.

4. A method of scrambling and de-scrambling data comprising the steps of:
scrambling content data in accordance with a scrambling algorithm;
transmitting said content data from said scrambling means, de-scrambling algorithm data for de-scrambling said content data scrambled in accordance with said scrambling algorithm, and flag data indicative of said de-scrambling algorithm data;
receiving said transmitted data;
storing second de-scrambling algorithm data and second flag data indicative of said second de-scrambling algorithm data in advance, and storing said first de-scrambling algorithm data;
comparing said first flag data with said second flag data;
selecting said second de-scrambling algorithm data when said first flag data agrees with said second flag data and selecting said first de-scrambling algorithm data when said first flag data disagrees with said second flag data; and
de-scrambling said content data in accordance with said selected de-scrambling algorithm data to output de-scrambled content data.

5. A data recording apparatus comprising:
first scrambling means for scrambling content data in accordance with first scrambling algorithm data;
second scrambling means for scrambling de-scrambling algorithm data in accordance with second scrambling algorithm data, said de-scrambling algorithm data being provided for de-scrambling said content data scrambled in accordance with said first scrambling algorithm data; and
recording means for recording said content data from said first scrambling means, said de-scrambling algorithm data from said second scrambling means, and flag data indicative of said second scrambling algorithm data on a recording medium.

6. A data recording medium comprising:
a first region for storing content data scrambled in accordance with first scrambling algorithm data;
a second region for storing de-scrambling algorithm data for de-scrambling said first scrambling algorithm data scrambled with second scrambling algorithm data; and
a third region for storing flag data indicative of said second de-scrambling algorithm data.

7. A data reproducing apparatus for reproducing data including content data scrambled in accordance with first scrambling algorithm data, first de-scrambling algorithm data scrambled with second scrambling algorithm data for de-scrambling said content data, and flag data indicative of said second scrambling algorithm data, comprising:
receiving means for receiving said data;
selecting means for selecting one of a plurality of sets of second de-scrambling algorithm data which corresponds to said second scrambling algorithm data in accordance with said flag data;
first de-scrambling means for de-scrambling said first de-scrambling algorithm data in accordance with said selected one set of second de-scrambling algorithm data; and
second de-scrambling means for de-scrambling said content data from said receiving means in accordance with said first de-scrambling algorithm data from said first de-scrambling means.

8. A method of scrambling and de-scrambling data comprising the steps of:
(a) scrambling content data in accordance with first scrambling algorithm data;
(b) scrambling first de-scrambling algorithm data in accordance with second scrambling algorithm data, said first de-scrambling algorithm data being provided for de-scrambling said content data scrambled in step (a);
(c) transmitting data including said content data scrambled in step (a), said first de-scrambling algorithm data scrambled in step (b), and flag data indicative of said second scrambling algorithm data;
(d) receiving said data;
(e) selecting one of a plurality of sets of second de-scrambling algorithm data which corresponds to said second scrambling algorithm data in accordance with said flag data in said received data;
(f) de-scrambling said first de-scrambling algorithm data in said received data in accordance with said selected one set of second de-scrambling algorithm data; and
(g) de-scrambling said content data in said received data in accordance with said first de-scrambling algorithm data de-scrambled in step (f).

9. A data recording apparatus comprising:
scrambling means for scrambling content data in accordance with scrambling algorithm data; and
recording means for recording said content data from said scrambling means and flag data indicative of said de-scrambling algorithm data on a recording medium.

10. A data recording medium comprising:
a first region for storing content data scrambled in accordance with scrambling algorithm data; and
a second region for storing flag data indicative of said scrambling algorithm data.

11. A data reproducing apparatus for reproducing data including content data scrambled in accordance with scrambling algorithm data and flag data indicative of de-scrambling algorithm data for de-scrambling said content data scrambled by said scrambling algorithm data, comprising:
receiving means for receiving said data;
storing means for storing a plurality of sets of second de-scrambling algorithm data;
selecting means for selecting one set of said second de-scrambling algorithm data corresponding to said flag data; and
de-scrambling means for de-scrambling said content data from said receiving means in accordance with said one set of said second de-scrambling algorithm data.

12. A method of scrambling and de-scrambling data comprising the steps of:
scrambling content data in accordance with scrambling algorithm data;
transmitting said content data scrambled in accordance with said scrambling algorithm data and flag data indicative of de-scrambling algorithm data for de-scrambling said content data scrambled by said scrambling algorithm data;
receiving said transmitted content data and flag data;
storing a plurality of sets of second de-scrambling algorithm data;
selecting one set of said said second de-scrambling algorithm data corresponding to said received flag data; and
de-scrambling said content data in accordance with said one set of said second de-scrambling algorithm data.

13. A data recording apparatus comprising:
scrambling means for scrambling content data in accordance with scrambling algorithm data; and
recording means for recording said content data from said scrambling means and de-scrambling algorithm data for de-scrambling said content data scrambled by said scrambling algorithm data on a recording medium.

14. A data recording medium comprising:
a first region for storing content data scrambled in accordance with scrambling algorithm data; and
a second region for storing de-scrambling algorithm data for de-scrambling said content data scrambled by said scrambling algorithm data.

15. A data reproducing apparatus for reproducing data including content data scrambled in accordance with scrambling algorithm data and de-scrambling algorithm data for de-scrambling said content data scrambled in accordance with said scrambling algorithm data, comprising:
receiving means for receiving said data;
storing means for storing said de-scrambling algorithm data from said receiving means; and
de-scrambling means for de-scrambling said content data from said receiving means in accordance with said de-scrambling algorithm data from said storing means to output de-scrambled content data.

16. A method of scrambling and de-scrambling data comprising the steps of:
scrambling content data in accordance with scrambling algorithm data;
transmitting said content data from said scrambling means and de-scrambling algorithm data for de-scrambling said content data scrambled in accordance with said scrambling algorithm data;
receiving said transmitted content data and said transmitted de-scrambling algorithm data;
storing second de-scrambling algorithm data; and
de-scrambling said content data from said receiving means in accordance with said de-scrambling algorithm data in said storing means to output said de-scrambled content data.
